# EUROPÄISCHE PATENTSCHRIFT

(11) **EP 0 741 072 B1**
(45) Veröffentlichungstag und Bekanntmachung des Hinweises auf die Patenterteilung: **21.07.1999**
(21) Anmeldenummer: 96810292.1
(22) Anmeldetag: 06.05.1996
(51) Int. Cl.: B62M 1/04, B62M 1/00

(54) **Vorrichtung zur Nutzung menschlicher Muskelenergie**
Device using human muscular energy
Dispositif utilisant de l'énérgie musculaire humaine

(30) Priorität: 05.05.1995 CH 137295
(43) Veröffentlichungstag der Anmeldung: 06.11.1996
(73) Patentinhaber: Zweifel, Peter, 4058 Basel (CH)
(72) Erfinder: Zweifel, Peter, 4058 Basel (CH)
(74) Vertreter: Ullrich, Gerhard, Dr.

(56) Entgegenhaltungen:
- BE-A- 480 197
- DE-A- 4 027 925
- GB-A- 1 180 212
- GB-A- 2 279 918
- US-A- 4 169 609

## Beschreibung

Gegenstand der vorliegenden Erfindung ist eine Vorrichtung zur Nutzung menschlicher Muskelenergie, wie sie im Oberbegriff des unabhängigen Patentanspruchs 1 definiert ist.

Die Nutzung erfolgt nicht, wie z.B. bei heutigen Fahrrädern gebräuchlich, durch Ausführen einer Kreisbewegung, sondern gemäss körpereigener Physiologie und damit zu optimalen Dauerleistungsbedingungen. Das im alten Bergbau verwendete Laufrad und die diesem körperphysiologisch gleichzusetzende Treppe erfüllen diese Anforderungen, sind aber zufolge ihrer Abmessungen nur beschränkt einsetzbar bzw. realisierbar.

Aus der BE-A-480 197 ist eine Vorrichtung zur mechanischen Nutzung menschlicher Muskelenergie für Fortbewegungsmittel bekannt, die zwei an einer schiefen Führung verschiebbar angeordnete Fussrasten aufweist. Die Fussrasten sind über Einwegkupplungen mit je einer endlosen Kette verbunden. Durch Niedertreten der Fussrasten in Fortbewegungsrichtung schräg nach vorne wird die Kette angetrieben. Da die Fussrasten schräg nach vorne getreten werden müssen, ist der physiologische Bewegungsablauf bei dieser Vorrichtung aber nicht ideal.

Der Erfindung liegt daher die Aufgabe zugrunde, eine Vorrichtung der eingangs erwähnten Art zu schaffen, die diesen Nachteil nicht aufweist. Diese Aufgabe wird durch die erfindungsgemässe Vorrichtung gelöst, wie sie im unabhängigen

Patentanspruch 1 definiert ist. Bevorzugte Ausführungsvarianten ergeben sich aus den abhängigen Patentansprüchen 2 bis 7 und bevorzugte Anwendungen aus den Patentansprüchen 8 bis 10.

Erfindungsgemäss sind die Funktionen von Laufrad und Treppe in einem schrittlangen Stück geneigter schiefer Ebene oder Kurve vereint, entlang welcher die potentielle Energie des darauf auf Fussrasten ansetzenden Körpergewichts mechanisch genutzt wird. Damit unterscheiden sich der mechanische Bewegungsablauf - ein Gleiten entlang der schiefen Ebene oder Kurve - von dem bekannten Rotieren einer Kurbel oder dem radialen Schwenken eines Trethebelpaares, und der physiologische Bewegungsablauf - ein treppensteigendes Schreiten - von der in mannigfachen Varianten bekannten rund oder unrund kreisenden Drehbewegung als auch von dem vertikal stampfenden, bäuchlings oder rücklings strampelnden oder innerhalb Kreissektoren sitzend oder stehend ausgeführten - und ermüdenden - Treten an Ort.

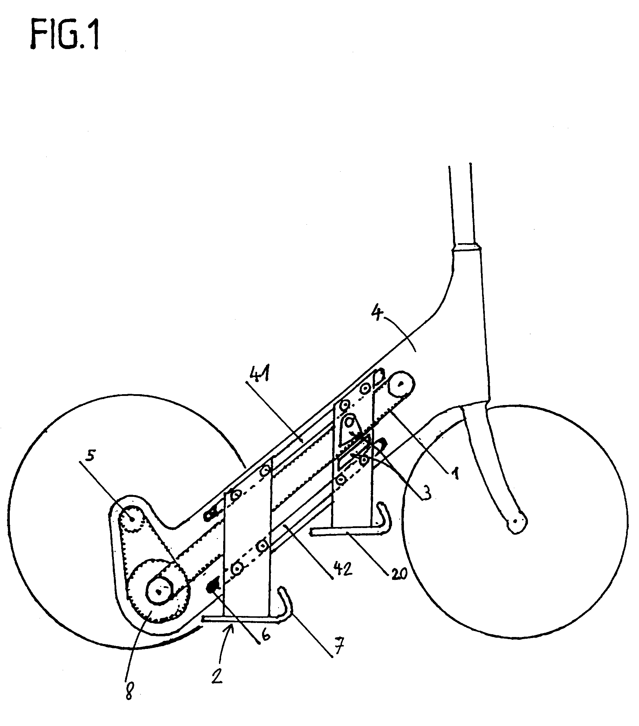

In der einzigen Figur ist als erfindungsgemässes Anwendungsbeispiel ein zweirädriges Fortbewegungsmittel dargestellt.

Zwei beidseitig eines Trägerteils 4, das hier dem Rahmen des Fortbewegungsmittels entspricht, in treppenähnlicher Neigung parallel gelagerte und durch eine Achse starr miteinander verbundene Antriebsbänder 1 werden mittels Einwegkupplungen 3 an Fussrasten 2 mit vorzugsweise horizontal einrastbaren Fussauflageelementen 20 gekoppelt, wobei die Fussrasten 2 bezüglich im Trägerteil 4 angeordneter Führungsrillen 41, 42 lagestabil bewegbar sind, so dass bei deren wechselweisem Niedertreten die Antriebsbänder 1 sich kontinuierlich und monodirektional bewegen. Je nachdem die Antriebsbänder unter- oder oberschlächtig an die Fussrasten gekoppelt sind, wird die Bewegung entweder direkt oder über ein den Drehsinn änderndes Zahnrad (in der Figur nicht dargestellt) auf die Radnabe 5 übertragen. Ein dazwischengeschaltetes Zahnrad 8 mit zwei Zahnkränzen unterschiedlicher Radien dient der Übersetzung und ermöglicht es, die Fussrasten bodennaher zu lagern. An ihrer tiefsten Position werden die Fussrasten von einem Puffer 6 aufgehalten, von den Antriebsbändern 1 abgekoppelt und mit der Fussspitze an der Fussspitzenkappe 7 hochgezogen. Zufolge ihrer individuellen Einwegkupplungen funktionieren die Fussrasten voneinander unabhängig, einzeln oder gemeinsam, sowohl zum Antrieb als auch zum Ausruhen. Vom eigentlichen Treppensteigen unterscheidet sich das Treten der Fussrasten insofern, als der Fahrer sich üblicherweise beidhändig an der Lenkstange haltend und sich daran stemmend seine Leistung auf den gesamten Körper verteilt.

Im Unterschied zum gebräuchlichen Kurbelantrieb eines Fahrrades ist erfindungsgemäss - anteilmässig variierend, d.h. fliessend alternierend - stets das gesamte Körpergewicht auf zumeist durchgestrecktem Bein im Einsatz, wie dies beim Kurbelantrieb zufolge zum Teil uneffizienter Drehmomente nur für Parforce-Phasen erbracht wird. Um die Leistung zu dosieren, kann entweder die Energieabgabe intermittierend erfolgen, die Neigung der Antriebsbänder variiert oder der Körperschwerpunkt verlagert werden. Da sich die Neigung des Geländes auch auf die Neigung der durch die Längsrichtung der Antriebsbänder 1 gehenden schiefen Ebene additiv oder subtraktiv überträgt, ist eine automatische Anpassung im Sinne der gebräuchlichen Fahrradübersetzung gegeben. Die zusätzlichen Zugkräfte der Rücken- und Armmuskulatur wirken sich bei der erfindungsgemäss aufrechten Körperhaltung ergiebiger aus, als wenn sie, wie es bei sitzender Fahrweise der Fall ist, über entsprechend spitzere Winkel zwischen Oberkörper, Oberschenkel und Unterschenkel geführt werden.

Der Anwendungsbereich gebräulicher Fahrradübersetzungen ist begrenzt, weil bei sehr kleiner Übersetzung das Hineinsacken in den toten Punkt ermüdet und lückenhaften Vortrieb zur Folge hat und bei sehr grosser Übersetzung das Überwinden der quasi-toten Phase übermässige Kraft und Zeit beansprucht, während bei der erfindungsgemässen kontinuierlichen Energieabgabe der Anwendungsbereich der Übersetzungen nach beiden Seiten erweitert wird, was ein Fahrzeug für steiles Gelände und zum Lastentransport, eventuell mit Anhänger, geeignet macht.

Einen zusätzlichen sportlichen Anreiz bietet das mögliche freihändige Lenken des Fortbewegungsmittels durch Gewichtsverlagerung auf den beiden Fussrasten 2, die sich sowohl in ihren tiefsten Positionen, als auch in Aktion befinden können.

## Patentansprüche

1. Vorrichtung zur mechanischen Nutzung menschlicher Muskelenergie, mit zwei längs einer schiefen Ebene oder Kurve verschiebbar an einem Trägerteil (4) angeordneten Fussrasten (2), die über Einwegkupplungen (3) mit einem endlosen Transmissionsmittel (1) verbunden sind, dadurch gekennzeichnet, dass Trägerteil (4) und Fussrasten (2) für treppensteigenartiges Niedertreten der Fussrasten (2), durch eine, auf die Blickrichtung des Anwenders bezogene, von oben/vorne nach unten/hinten erfolgende Bewegung, geeignet angeordnet sind, so dass durch treppensteigenartiges Niedertreten der Fussrasten (2) Energie und Bewegung kontinuierlich und monodirektional auf das Transmissionsmittel übertragbar ist.

2. Vorrichtung nach Anspruch 1, dadurch gekennzeichnet, dass das endlose Transmissionsmittel aus zwei miteinander verbundenen Antriebsbändern (1) oder Ketten besteht und jedes Antriebsband (1) bzw. jede Kette mit einer der Fussrasten (2) koppelbar ist.

3. Vorrichtung nach Anspruch 1 oder 2, dadurch gekennzeichnet, dass die Neigung des Trägerteils (4) und damit der schiefen Ebene oder Kurve variierbar ist und der Trägerteil (4) an einem Rahmen in verschiedenen Positionen eingerastet werden kann.

4. Vorrichtung nach einem der Ansprüche 1 bis 3, dadurch gekennzeichnet, dass die Fussrasten (2) zumindest annähernd horizontal angeordnete Fussauflageelemente (20) aufweisen.

5. Vorrichtung nach Anspruch 4, dadurch gekennzeichnet, dass die Fussauflageelemente (20) unabhängig von der Neigung des Trägerteils (4) in horizontalen Positionen einrastbar sind.

6. Vorrichtung nach Anspruch 4 oder 5, dadurch gekennzeichnet, dass an den Fussauflageelementen (20) Fussspitzenkappen (7) vorgesehen sind, die es ermöglichen, die Fussrasten (2) mit den Fussspitzen nach oben zu ziehen.

7. Vorrichtung nach einem der Ansprüche 1 bis 6, dadurch gekennzeichnet, dass die beiden Fussrasten (2) gleichzeitig in ihre tiefsten Positionen bringbar sind, wo sie eine stabile Standfläche für beide Füsse eines Benutzers bilden.

8. Fortbewegungsmittel, dadurch gekennzeichnet, dass es mit einer Vorrichtung nach einem der Ansprüche 1 bis 7 angetrieben wird.

9. Fortbewegungsmittel nach Anspruch 8, dadurch gekennzeichnet, dass es ein Fahrrad ist.

10. Fortbewegungsmittel nach Anspruch 8, dadurch gekennzeichnet, dass es ein Wasserfahrzeug ist.

## Claims

1. Device for the mechanical utilization of human muscle power, having two footrests (2), which are arranged on a support part (4) so as to be displaceable along an inclined plane or curve and are connected to an endless transmission means (1) via one-way couplings (3), characterized in that support part (4) and footrests (2) are arranged so as to be suitable for treading down on the footrests (2) in a stair-climbing-like manner by a movement which, relative to the direction of view of the user, is effected from the top-front to the bottom-back, so that power and motion can be transmitted continuously and monodirectionally to the transmission means by treading down on the footrests (2) in a stair-climbing-like manner.

2. Device according to Claim 1, characterized in that the endless transmission means consists of two drive belts (1) or chains connected to one another, and each drive belt (1) or each chain can be coupled to one of the footrests (2).

3. Device according to Claim 1 or 2, characterized in that the inclination of the support part (4) and thus of the inclined plane or curve is variable, and the support part (4) can be locked in various positions on a frame.

4. Device according to one of Claims 1 to 3, characterized in that the footrests (2) have foot-supporting elements (20) arranged at least approximately horizontally.

5. Device according to Claim 4, characterized in that the foot-supporting elements (20) can be locked in place in horizontal positions independently of the inclination of the support part (4).

6. Device according to Claim 4 or 5, characterized in that toecaps (7), which enable the footrests (2) to be pulled upwards with the toes, are provided on the foot-supporting elements (20).

7. Device according to one of Claims 1 to 6, characterized in that the two footrests (2) can be put into their lowest positions simultaneously, where they form a stable standing surface for both feet of a user.

8. Locomotion means, characterized in that it is driven by a device according to one of Claims 1 to 7.

9. Locomotion means according to Claim 8, characterized in that it is a bicycle.

10. Locomotion means according to Claim 8, characterized in that it is a watercraft.

## Revendications

1. Dispositif d'utilisation mécanique de l'énergie musculaire humaine, avec deux supports de pied (2) disposés sur une pièce porteuse (4) et déplaçables le long d'un plan oblique ou d'une courbe, lesquels sont reliés par des accouplements unidirectionnels (3) avec un moyen de transmission sans fin (1), caractérisé en ce que la pièce porteuse (4) et les supports de pied (2) sont disposés de manière adaptée pour pouvoir pousser vers le bas les supports de pied (2) comme on monte un escalier, par un mouvement, par rapport à la direction du regard de l'utilisateur, s'effectuant du haut / de l'avant vers le bas / l'arrière, de sorte qu'en poussant vers le bas les supports de pied (2) comme on monte un escalier, de l'énergie et du mouvement peuvent être transmis de manière continue et unidirectionnelle au moyen de transmission.

2. Dispositif selon la revendication 1, caractérisé en ce que le moyen de transmission sans fin se compose de deux bandes d'entraînement (1) ou de chaînes reliées l'une à l'autre et en ce que chaque bande d'entraînement (1) ou chaque chaîne peut être accouplée à l'un des supports de pied (2).

3. Dispositif selon la revendication 1 ou 2, caractérisé en ce que l'inclinaison de la pièce porteuse (4) et donc du plan oblique ou de la courbe est variable et la pièce porteuse (4) peut être encliquetée dans diverses positions sur un cadre.

4. Dispositif selon l'une quelconque des revendications 1 à 3, caractérisé en ce que les supports de pied (2) présentent des éléments d'appui pour les pieds (20) disposés au moins approximativement horizontalement.

5. Dispositif selon la revendication 4, caractérisé en ce que les éléments d'appui pour les pieds (20) sont encliquetables dans des positions horizontales indépendamment de l'inclinaison de la pièce porteuse (4).

6. Dispositif selon la revendication 4 ou 5, caractérisé en ce qu'il est prévu sur les éléments d'appui pour les pieds (20) des coques pour le bout des pieds (7) permettant de tirer vers le haut les supports de pied (2) avec le bout des pieds.

7. Dispositif selon l'une quelconque des revendications 1 à 6, caractérisé en ce que les deux supports de pied (2) peuvent être amenés simultanément dans leur position la plus basse, où ils forment une surface d'appui stable pour les deux pieds d'un utilisateur.

8. Moyen de déplacement vers l'avant, caractérisé en ce qu'il est entraîné par un dispositif selon l'une quelconque des revendications 1 à 7.

9. Moyen de déplacement vers l'avant selon la revendication 8, caractérisé en ce qu'il s'agit d'une bicyclette.

10. Moyen de déplacement vers l'avant selon la revendication 8, caractérisé en ce qu'il s'agit d'un véhicule de propulsion sur l'eau.
